Europäisches Patentamt

**European Patent Office**

**Office européen des brevets**

(11) Numéro de publication: **0 238 584 B1**

## FASCICULE DE BREVET EUROPEEN

(45) Date de publication de fascicule du brevet: **23.09.92**  (51) Int. Cl.⁵: **F01L 7/02**, F02B 29/00

(21) Numéro de dépôt: **86905840.4**

(22) Date de dépôt: **24.09.86**

(86) Numéro de dépôt internationale :
**PCT/FR86/00323**

(87) Numéro de publication internationale :
**WO 87/01762 (26.03.87 87/07)**

(54) **PROCEDE ET DISPOSITIF DE CONTROLE D'UN CIRCUIT DE GAS D'ECHAPPEMENT DE MOTEUR.**

(30) Priorité: **24.09.85 FR 8514231**
**27.08.86 FR 8612198**

(43) Date de publication de la demande:
**30.09.87 Bulletin 87/40**

(45) Mention de la délivrance du brevet:
**23.09.92 Bulletin 92/39**

(84) Etats contractants désignés:
**AT BE CH DE GB IT LI LU NL SE**

(56) Documents cités:
**EP-A- 0 145 479**
**GB-A- 2 487**
**US-A- 3 526 216**
**US-A- 4 116 189**

**See also references of WO8701762**

(73) Titulaire: **Negre, Guy**
**Les Adrechs**
**F-83560 Vinon/Verdon(FR)**

(72) Inventeur: **Negre, Guy**
**Les Adrechs**
**F-83560 Vinon/Verdon(FR)**

Rank Xerox (UK) Business Services

## Description

L'invention concerne un procédé et un dispositif de contrôle d'un circuit de gaz d'échappement, en particulier de moteur à combustion interne fonctionnant suivant le cycle 4 temps à allumage commandé ou diesel et équipé d'un distributeur rotatif, tels que selon le GB-A-2 487 A.D 1912.

Dans les moteurs à distribution rotative 4 temps, et plus particulièrement ceux munis d'un distributeur rotatif à canal de transfert latéral unique assurant à la fois, successivement l'échappement puis l'admission, alors que le corps du distributeur obture la chambre de combustion durant les temps de compression et combustion, le canal de transfert, au point mort haut en fin d'échappement et début d'admission, se trouve ouvert sur la chambre de combustion en fin d'ouverture de l'échappement et en début d'ouverture de l'admission, réalisant ainsi ce qu'il est convenu d'appeler "balance" ou "balayage". Il est nécessaire durant cette phase (très brève dans le temps) de vider au maximum de ses gaz brûlés la chambre de combustion ou volume mort (ce qui est valable pour tous les types de moteurs) et dans ce cas précis, le volume du canal de transfert qui augmente considérablement le volume de ce "volume mort", d'autant plus que le dessin des moteurs conduit à un volume de canal de transfert considérable afin d'obtenir des sections de passage d'admission et d'échappement compatibles avec une bonne respiration, gage de bon rendement.

Pour fixer les idées, il n'est pas rare de devoir réaliser un canal de transfert dont le volume peut atteindre de 10 à 25% du volume total de la cylindrée unitaire. Par ailleurs, il est nécessaire de savoir qu'un moteur 4 temps fonctionne suivant les lois des mouvements vibratoires et que, la longueur des conduits tant d'admission que d'échappement, leurs diamètres ou sections, le calage de distribution (avance à l'ouverture de l'admission, retard à la fermeture de l'échappement) déterminent des accords, créant rythmiquement des pressions et des dépressions tant à l'admission qu'à l'échappement.

L'accord parfait est d'obtenir une dépression maximale à l'échappement et une pression maximale à l'admission au point mort haut alors que l'échappement est encore ouvert et l'admission déjà ouverte de telle sorte que le volume mort sera balayé et vidé de ses gaz brûlés permettant ainsi un meilleur remplissage de gaz frais et un meilleur rendement du moteur.

Dans la pratique cet accord parfait ne peut être réalisé que sur une très faible plage de régime de rotation et il faudra donc se résoudre à perdre du rendement aux autres régimes de rotation du moteur, perte proportionnelle à la valeur du volume mort.

Or nous avons vu que dans le cas du distributeur rotatif à canal de transfert latéral unique, ce volume mort est bien plus important que celui d'un moteur classique à soupapes, et que cette perte sera proportionnellement plus importante bien que compensée partiellement par un meilleur remplissage, rendant ce type de moteur plus accoustique que les moteurs classiques.

Le procédé suivant l'invention permet d'éliminer ce défaut, de bien vider le volume mort constitué du volume de la chambre de combustion additionné du volume du canal de transfert au point mort haut, et d'améliorer sur toute la plage de régime le rendement du moteur.

Le procédé suivant l'invention est caractérisé selon les termes de la revendication 1, l'invention concerne également les dispositifs selon les revendications 5,6 8 et 11, pour la mise en oeuvre du procédé.

La dépression destinée à aspirer le volume mort pourra être créée par tous les moyens connus sans pour cela changer le principe de l'invention, soit par une pompe à vide ou à dépression, autonome ou liée au moteur, soit par des prises dynamiques positionnées en des endroits favorables sur le circuit d'échappement principal, ou toute autre solution permettent le même résultat.

Le calage du système, fermeture du conduit principal, ouverture et fermeture du circuit secondaire, devra prendre en compte les inerties des veines gazeuses, ainsi il sera possible d'ouvrir le conduit secondaire avant la fermeture du conduit principal, fermeture intervenant sensiblement ayant le point mort haut.

Plusieurs dispositifset systèmes d'ouverture et de fermeture du deuxième circuit d'échappement secondaire peuvent être mis en oeuvre sans changer pour cela le principe du procédé de l'invention.

Il sera ainsi possible de réaliser :

- un conduit dévié dans le canal de transfert du distributeur rotatif et s'ouvrant sur le deuxième conduit d'échappement secondaire (dans un autre plan) avec ses calages appropriés, l'ouverture et la fermeture étant alors commandées par le distributeur rotatif lui-même;

- un petit distributeur rotatif secondaire entrainé par le moteur mettant en communication au montent opportun le conduit d'échappement secondaire, positionné ici sous le conduit principal sensiblement dans le même plan, l'ouverture du deuxième conduit étant commandé par le distributeur secondaire, la fermeture par le distributeur principal;

- tout système de tiroirs, soupapes ou autres permettant de réaliser l'ouverture et la fermeture du deuxième circuit.

Selon un autre mode de réalisation, et notamment dans un moteur comportant plusieurs cylindres, le circuit d'échappement secondaire d'un cylindre pourra être directement raccordé à une prise de dépression dynamique dans le conduit d'échappement principal d'un autre cylindre qui sera en cours d'échappement durant la phase fin échappement du premier et créera par son flux alors continu la dépression souhaitée, le distributeur obturant ensuite le deuxième conduit dans les mêmes conditions que précédemment, et ainsi de suite pour chaque cylindre.

Dans ce cas,et durant toute la durée de l'échappement principal une partie des gaz brûlés s'évacuera à travers le conduit d'échappement secondaire dans le conduit d'échappement principal de l'autre cylindre.

Plus le nombre de cylindre sera élevé, plus il sera aisé de trouver un cylindre en phase d'échappement permettant de réaliser l'aspiration nécessaire à la vidange du volume mort au moment opportun.

Le procédé et les dispositifs décrits ci-dessus sont également applicables lorsque le moteur est équipé d'un compresseur d'air d'admission ou encore d'un turbo-compresseur

Dans le cas où le moteur est équipé d un compresseur de type volumétrique -Roots ou autre sysyème entrainé mécaniquement, l'air d'admission est alors à une pression supérieure à la pression atmosphérique. La différence de pression entre l'admission et l'échappement est alors évidente, supérieure à l'admission, et le système de mise en dépression de l'échappement secondaire peut éventuellement être suprimé. Dans le cas où le moteur est équipé d'un turbo-compresseur, seul le conduit d'échappement principal de chaque cylindre est raccordé à la turbine d'entrainement du compresseur, le conduit d'échappement secondaire fonctionne alors comme décrit précédemment et est raccordé soit à un système de mise en dépression, soit dans le circuit d'échappement après la turbine de telle sorte que la pression supérieure à l'admission favorise la vidange des volumes morts.

D'autres buts, avantages et caractéristiques de l'invention apparaitront à la lecture de la description à titre non limitatif de plusieurs modes de réalisation de l'invention appliquée au contrôle de l'échappement d'un moteur fonctionnant selon le cycle à 4 temps, faite en regard des dessins annéxés où :

- la figure 1 représente schématiquement, vu en coupe transversale au point haut de fin d'échappement et début d' admission un moteur 4 temps dans lequel, selon l'invention, le circuit secondaire d'échappement est contrôlé par le distributeur rotatif;
- les figures 2-3-4 représentent schématiquement les positions respectives des éléments de ce même dispositif : durant la phase d'échappement Fig 2; fin d'échappement principal et début d'échappement secondaire, Fig 3; fermeture de l'échappement secondaire Fig 4;
- la figure 5 représente au point mort haut, en coupe transversale, un autre mode de réalisation suivant l'invention dans laquelle le conduit d'échappement secondaire, sensiblement dans le même plan que le conduit principal, positionné dans le cycle après ce dernier, voit notamment son ouverture commandée par un distributeur rotatif secondaire;
- la figure 6 représente au point mort haut une coupe transversale d'un moteur comportant plusieurs cylindres, 4 temps, équipé d'un distributeur rotatif à deux conduits d'échappement, selon l'invention, et dans lequel le conduit secondaire est relié directement à une prise de dépression dynamique dans le conduit principal de l'échappement d'un autre cylindre.
- la figure 7 représente schématiquement au point mort haut de fin d'échappement et de début d'admission, vue en coupe transversale, une variante du procédé selon l'invention dans laquelle le moteur est équipé d'un turbo-compresseur.

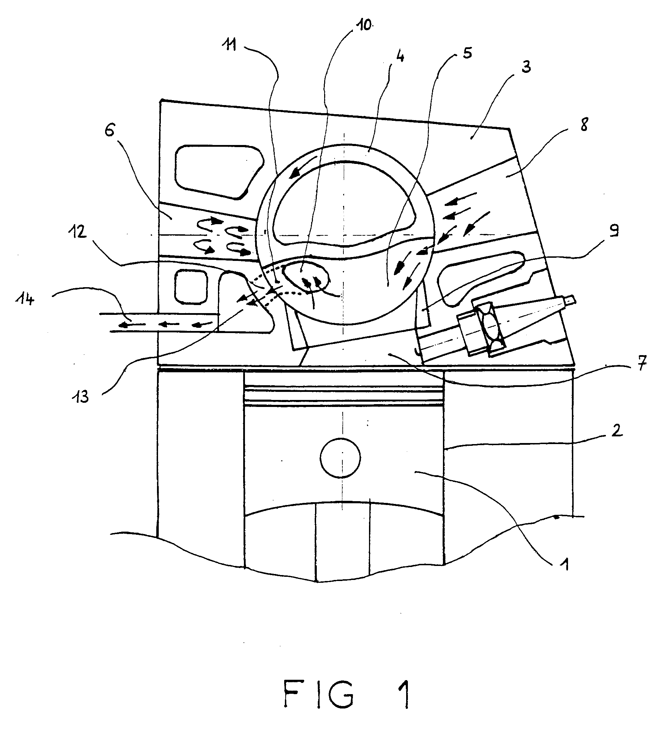

Le moteur représenté schématiquement sur les figures 1-2-3-4 comporte des éléments bien connus dans les moteurs à distribution rotative, fonctionnant suivant le cycle 4 temps. Un piston 1, coulissant dans une chemise 2 est coiffé par une culasse 3 dans laquelle est entrainé, à demi-vitesse du moteur, un distributeur rotatif 4, à canal de transfert unique 5, qui lors de sa rotation (sens de la flèche) mettra successivement en communication le conduit d'échappement 6 et la chambre de combustion 7 afin d'assurer le temps d'échappement, puis ensuite la chambre de combustion 7 avec l'admission 8 assurant ainsi le temps d'admission, le corps du distributeur rotatif 4 obturant la chambre de combustiom durant les temps de compression et combustion, l'étanchéité étant assurée par l'élément coulissant 9.

La figure 1 représente le moteur au point mort haut alors que le conduit d'echappement principal 6 vient d'être obturé de telle sorte qu'aucune contre-pression ne vienne refouler des gaz brûlés dans le volume mort constitué par le canal de transfert 5 du distributeur, un orifice latéral 10 permet, par l'intermédiaire d'un conduit 11 percé dans le distributeur sur un autre plan que le canal de transfert 5 et d'un conduit 12 percé en regard dans la culasse 3 ,de mettre en communication le volume mort 5 et 7 avec une chambre 13 reliée par le canal 14 à un dispositif créant une dépression. Durant le temps de rotation où les conduits 11 et 12 sont en concordance, les gaz brûlés contenus dans le volume 5 et 7 vont s'échapper du fait de la différence de pression vers la chambre 13 et le conduit 14, amorçant également les gaz frais d'admission par le conduit 8. Le positionnement et les dimensions des conduits 11 et 12 permettent le réglage et le calage de l'ouverture et de la fermeture du conduit d'échappement secondaire. Lors de la fermeture du circuit d'échappement secondaire l'alésage de la culasse 3 obture le conduit 11 alors que réciproquement, le corps du distributeur 4 obture le conduit 12. Un dispositif d'étanchéité complémentaire peut être appliqué à cet effet.

On comprend dès lors les avantages du procédé ainsi que du dispositif ci-dessus.

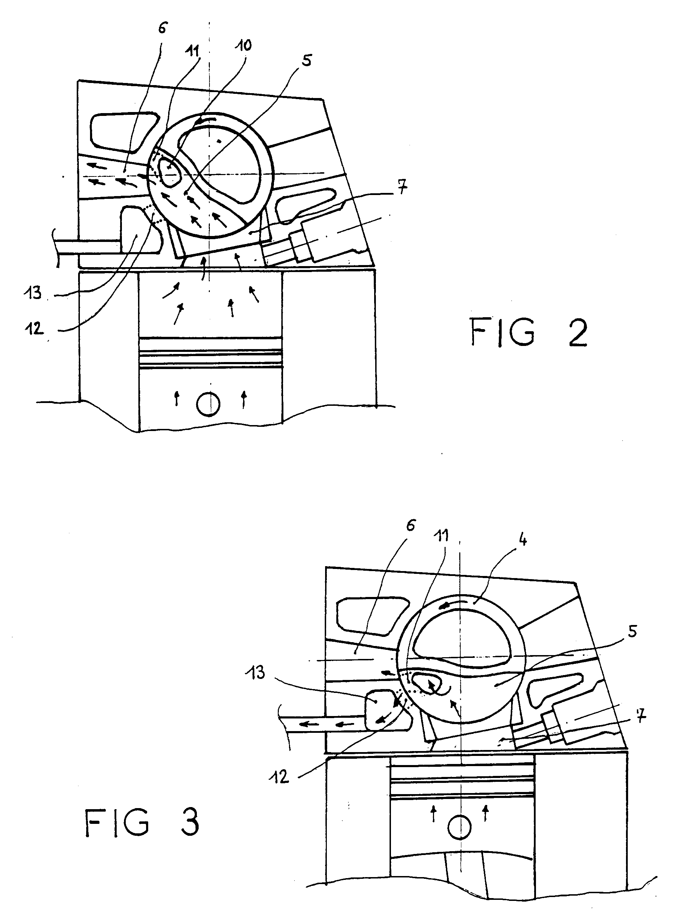

L'échappement s'effectue normalement, Fig 2, par le conduit d'échappement principal 6. Le circuit d'échappement secondaire, constitué par l'orifice 10 et les conduits 11 et 12 est obturé. Avant qu'une contre-pression à l'échappement lors des régimes de rotation défavorables ne vienne refouler les gaz brûlés dans le canal de transfert 5 et la chambre de combustion 7, ou empêcher la bonne évacuation des gaz brûlés, soit sensiblement avant le point mort haut, Fig 3, le corps du distributeur 4 vient obturer le conduit d'échappement 6 alors que le circuit secondaire d'échappement s'ouvre par une mise en concordance des conduits 11 et 12, permettent à la dépression régnant dans la chambre 13 de terminer l'échappement et d'aspirer le volume de gaz brûlés contenus dans la chambre 7 et le canal 5.

L'opération se poursuit au point mort haut, Fig 1, la dépression amorçant en outre le début de l'admission des gaz frais qui viennent remplacer progressivement les gaz brûlés dans le volume mort constitué par le canal de transfert 5 et la chambre de combustion 7.

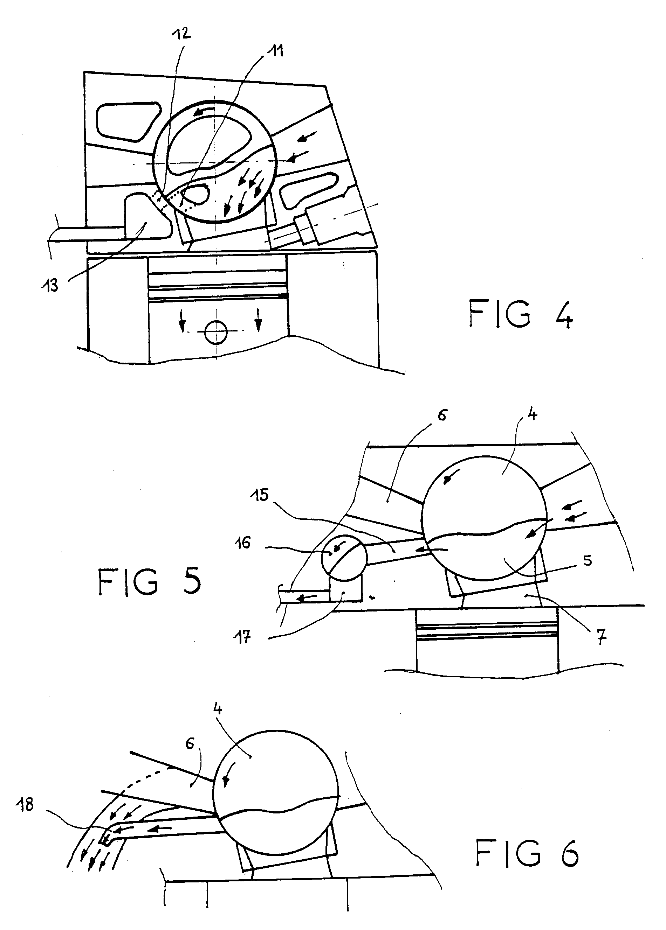

Quelques degrés après le point mort haut, Fig 4, alors que le piston 1 commence sa descente, les conduits 11 et 12 du circuit d'échappement secondaire n'étant plus en coïncidence, le circuit secondaire se trouve obturé et l'admission se poursuit normalement.

La fermeture du circuit secondaire devra intervenir avant que la dépression exercée par le piston dans sa descente ne soit supérieure à celle régnant dans la capacité 13.

La figure 5 représente schématiquement, en coupe transversale au point mort haut, un autre mode de réalisation du procédé objet de l'invention.

Le circuit secondaire, ici réalisé dans le même plan que le canal de transfert, est caractérisé par un conduit 15 débouchant d'une part dans l'alésage du distributeur et d'autre part positionné après le conduit d'échappement 6 dans le sens de rotation du distributeur. L'ouverture du deuxième circuit est commandée par un distributeur secondaire 16 entrainé par le moteur mettant en communication le volume 5 plus 7 avec une capacité 17 en dépression.

Dans ce cas c'est le distributeur principal 4 qui assure à la fois la fermeture de l'échappement principal 6 puis de l'échappement secondaire 15 suivant les calages choisis. Le principe de fonctionnement est identique à celui décrit précédemment. Le distributeur rotatif secondaire peut être remplacé par un tiroir ou une soupape, ou tout autre moyen produisant le même effet.

Dans le cas d'un moteur comportant plusieurs cylindres, et suivant un autre mode de réalisation Fig 6, le conduit d'échappement secondaire d'un cylindre est mis en communication avec une prise de dépression dynamique 18 située dans le flux de l'échappement d'un autre cylindre en phase d'échappement lorsque le conduit principal du premier cylindre est obturé et ce jusqu'à la fermeture du circuit secondaire de ce même cylindre. Dans ce cas le conduit secondaire est ouvert durant le temps échappement et une partie de l'échappement du cylindre concerné s'éffectue dans le conduit principal de l'autre cylindre.

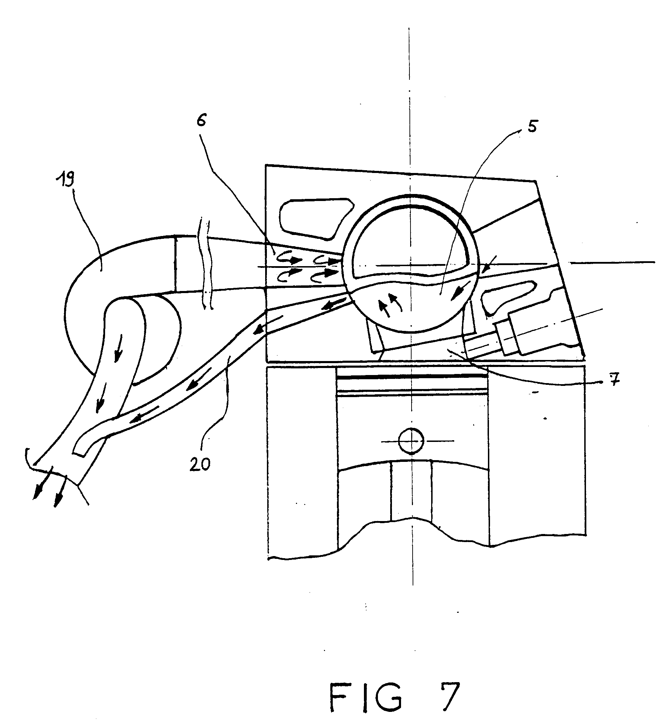

Selon une autre variante du procédé et dispositif suivant l'invention Fig 7 où le moteur est équipé d'un turbo-compresseur, l'échappement principal 6 est directement relié à la turbine d'entrainement du turbo-compresseur 19 alors que l'échappement secondaire 20, disposé ici dans le même plan que le canal de transfert 5 et le conduit d'échappement principal 6, est raccordé à l'échappement principal après le turbo-compresseur.

On comprend dès lors les avantages de cette disposition dans laquelle l'échappement secondaire ne subit aucune contrepression et se trouve soit en dépression légère due à l'écoulement de la veine des gaz d'echappement après le turbo, soit a la pression atmosphérique, alors que l'air d'admission est comprimée à des pressions supérieures à la pression atmosphérique favorisant ainsi l'écoulement dans le conduit d'échappement secondaire et la bonne vidange des volumes morts. L'échappement secondaire 20 reste ouvert durant toute la période d'évacuation des gaz.

Toutefois, il est possible d'utiliser un distributeur rotatif secondaire tel que decrit sur la figure 5, ou autre tiroir afin d'obturer le circuit secondaire pendant l'ouverture du circuit principal, sans changer pour cela le principe de fonctionnement.

De même qu'il peut être envisagé de l'appliquer à un moteur à soupapes, dans ce cas, les deux circuits d'échappement seront commandés par des soupapes d'échappement distinctes.

**Revendications**

1. Procédé de contrôle d'un circuit de gaz d'échappement de moteur à 4 temps à distribution par soupapes ou à distribution rotative comportant dans ce cas un distributeur rotatif principal (4) comprenant un canal de transfert latéral unique (5) le procédé étant destiné à assurer la vidange des gaz brûlés contenus, au point mort haut, dans le volume mort constitué par la chambre de combustion (7) ou par la chambre de combustion (7) et le canal de transfert (5) du distributeur rotatif (4)-,caractérisé :

- en ce que la fermeture du conduit d'échappement est réalisée sensiblement avant le point mort haut, de telle sorte que les contre-pressions éventuelles à l'échappement ne viennent pas, suivant les régimes de rotation, empêcher la vidange des gaz brûlés dans le dit volume mort (7;5,7) ou bien refouler les gaz brûlés vers le cylindre,

- en ce que la dite vidange des gaz brûlés est alors poursuivie à travers un circuit d'échappement secondaire qui, sensiblement lors de la fermeture du conduit d'échappement principal (6) met en communication le dit volume mort (7;5,7) avec un conduit ou une capacité (13) mis en dépression par tout moyen approprié;

- en ce que l'admission est ouverte alors que le circuit d'échappement secondaire est encore ouvert, ceci assurant l'amorçage de l'admission permettant ainsi un meilleur remplissage du moteur;

- et en ce que le circuit d'échappement secondaire est ensuite obturé avant que la dépression due à l'aspiration du piston lors de l'admission ne soit supérieure à celle régnant dans la capacité en dépression du circuit secondaire afin d'éviter tout refoulement de gaz brûlés vers le canal de transfert du distributeur et / ou la chambre de combustion.

2. Procédé de contrôle d'un circuit de gaz d'échappement de moteur selon la revendication 1 caractérisé par le fait que, dans le cas d'un moteur à plusieurs cylindres, la dépression destinée au circuit d'échappement secondaire d'un cylindre, est créée par une prise dynamique dans le flux du conduit d'échappement principal d'un autre cylindre qui sera en cours d'échappement durant la phase échappement secondaire du premier cylindre cité.

3. Procédé de contrôle d'un circuit d'échappement de moteur à distribution rotative selon la revendication 1 caractérisé par le fait que dans le cas d'un moteur comportant plusieurs cylindres, la dépression destinée aux conduits d'échappement secondaires est créée par une prise dynamique dans le flux du circuit d'échappement principal après la réunion de tout ou partie des échappements principaux de chaque cylindre alors que le flux est stabilisé et circule de façon continue.

4. Procédé de contrôle d'un circuit d'échappement selon la revendication 1 caractérisé par le fait que la dépression destinée aux conduits d'échappement secondaires est créée par une pompe à dépression autonome ou entrainée par le moteur.

5. Dispositif pour la mise en oeuvre du procédé suivant les revendications 1,3 et 4 dans un moteur à distribution rotative comportant dans le distributeur (4) un canal de transfert latéral unique (5), le dispositif comprenant un conduit d'échappement principal (6) qui, dans la phase d'échappement du cycle, est mis en communication avec la chambre de combustion (7) à travers le canal de transfert (5) du distributeur rotatif (4), caractérisé en ce que le distributeur rotatif (4) obture le dit conduit d'échappement principal (6) dans la phase d'échappement du cycle, sensiblement avant le point mort haut, pour éviter les contre-pressions et refoulements des gaz d'échappement vers le cylindre et, en ce que le dispositif comprend un circuit d'échappement secondaire constitué d'un conduit (11) percé radialement dans le distributeur rotatif sur un autre plan que le canal de transfert (5) et débouchant sur le dit canal de transfert (5) par un orifice (10) percé latéralement dans le canal de transfert (5), et d'un conduit (12) percé dans la culasse fixe (3) débouchant d'un côté sur le dit conduit (11) du distributeur (4) dans l'alésage de la culasse et de l'autre côté dans une capacité (13) mise en dépression, l'ouverture, sensiblement avant le point mort haut et la fermeture, après le point mort haut, de ce circuit d'échappement secondaire étant commandées par la mise en concordance du conduit (12) percé dans la culasse et du conduit (11) percé radialement dans le distributeur permettant ainsi par aspiration la vidange de la chambre de combustion et du canal de transfert, le distributeur rotatif principal ouvrant par son canal de transfert (5) l'admission (8) alors que le circuit d'échappement secondaire est encore ouvert.

6. Dispositif pour la mise en oeuvre du procédé suivant les revendications 1,3 et 4 dans un moteur à distribution rotative comportant un distributeur rotatif principal (4), un canal de transfert latéral unique (5), le dispositif comprenant un conduit d'échappement principal (6) qui, dans la phase d'échappement du cycle est mis en communication avec la chambre de combustion (9) à travers le canal de transfert (5) caractérisé en ce que le distributeur rotatif principal (4) obture le conduit d'échappement principal (6) dans la phase d'échappement du cycle sensiblement avant le point mort haut pour éviter les contre-pressions et refoulements des gaz d'échappement vers le cylindre et en ce que le dispositif comprend un circuit d'échappement secondaire constitué d'un conduit (15) percé dans la culasse, positionné sous et après le conduit d'échappement principal dans le sens de rotation, et débouchant sur le distributeur rotatif principal (4) sensiblement sur le même plan transversal que le canal de transfert (5) et d'un distributeur rotatif secondaire (16) commandant sensiblement lors de la fermeture du conduit d'échappement principal (6) l'ouverture du dit conduit sur une capacité mise en dépression (17) assurant ainsi la vidange par dépression de la chambre de combustion et des volumes morts, le distributeur rotatif principal ouvrant par son canal de transfert (5) l'admission (8), alors que le circuit d'échappement secondaire est encore ouvert, la fermeture du circuit d'échappement secondaire étant ensuite assurée par le distributeur principal (4) dans sa rotation avant que le dépression due à l'aspiration du piston ne soit supérieurs à celle de la capacité (17).

7. Dispositif de contrôle d'un circuit de gaz d'échappement de moteur à distribution rotative suivant la revendication 6 caractérisé par le fait que le distributeur rotatif secondaire (16) peut être remplacé par un tiroir ou bien par une soupape ou tout autre moyen produisant le même effet.

8. Dispositif pour la mise en oeuvre du procédé suivant les revendications 1 à 4 appliqué aux moteurs à soupapes classiques comprenant un conduit d'échappement principal (6) contrôlé par une soupape d'échappement classique, caractérisé en ce que cette soupape obture le conduit d'échappement sensiblement avant le point mort haut en fin d'échappement pour éviter les contre-pressions et refoulements des gaz d'échappement vers le cylindre, et en ce que le dispositif comprend un deuxième conduit d'échappement dit secondaire relié à une capacité mise en dépression et contrôlé par une deuxième soupape d'échappement dont l'ouverture est commandée avant le point mort haut, et la fermeture après le point mort haut assurant ainsi, par dépression la vidange de la chambre de combustion, une soupape ouvrant l'admission alors que le conduit d'échappement secondaire est encore ouvert.

9. Procédé de contrôle d'un circuit de gaz d'échappement selon les revendications 1 à 4, appliqué à un moteur équipé d'un compresseur d'air d'admission ou d'un turbo compresseur, la vidange de la chambre de combustion et / ou des volumes morts s'effectuant du fait de la différence de pression, supérieure à la pression atmosphérique à l'admission et sensiblement égale à la pression atmosphérique à l'échappement secondaire permettant ainsi la vidange des volumes morts.

10. Dispositif selon les revendications 5 à 8 pour la mise en oeuvre du procédé suivant la revendication 9 caractérisé en ce que le moteur est équipé de compresseur d' air à l'admission.

11. Dispositif pour la mise en oeuvre du procédé suivant la revendication 9, appliqué à un moteur à distribution rotative comportant dans le distributeur (4) un canal de transfert latéral unique (5), le dispositif comprenant un conduit d'échappement principal (6), qui dans la phase d'échappement du cycle est mis en communication avec la chambre de combustion à travers le canal de transfert (5) du distributeur rotatif (4) caractérisé en ce que le moteur est équipé d'un turbo compresseur, en ce que le distributeur rotatif (4) obture le dit conduit d'échappement principal (6) dans la phase d'échappement du cycle sensiblement avant le point mort haut pour éviter les contre-pressions et refoulements des gaz d'échappement vers le cylindre , et en ce que le dispositif comprend un circuit d'échappement secondaire constitué d'un conduit percé dans la culasse, positionné sous et après le conduit d'échappement principal dans le sens de rotation, sensiblement sur le même plan transversal, et débouchant dans l'échappement après la turbine, la fermeture du circuit d'échappement secondaire étant effectuée après le point mort haut, par le distributeur rotatif, le distributeur rotatif principal ouvrant l' admission, alors que le circuit d'échappement secondaire est encore ouvert, permettant ainsi la vidange de la chambre de combustion et des volumes morts par différence de pression supérieure à l'admission du fait du compresseur.

**Claims**

1. Process for controlling an exhaust gas circuit on a 4-stroke engine with rotary distribution or valve distribution, in the former case comprising a main rotary distributor (4) with a single lateral transfer channel (5), the process being designed to ensure emptying of the burnt gases contained, at the top dead centre, in the dead volume comprising the combustion chamber (7) or the combustion chamber (7) and transfer channel (5) of the rotary distributor (4), characterised in that:
   - the exhaust conduit is closed slightly before the top dead centre so that any exhaust counter-pressures do not, in the rotary system, prevent discharge of the burnt gases into the said dead volume (7; 5, 7) or causes back flow of burnt gases towards the cylinder;
   - the said discharge of burnt gases is then continued through a secondary exhaust circuit which, roughly during closure of the main exhaust conduit (6) connects up the said dead volume (7; 5, 7) with a pipe or a volume (13) in which a depression is created by any appropriate means;
   - the inlet is open when the secondary exhaust circuit is still open, so as to ensure priming of the inlet and thereby ensure better engine filling;
   - and the secondary exhaust circuit is then closed before the depression due to piston suction during the intake phase exceeds that existing in the depressed volume of the secondary circuit so that avoid any back flow of burnt gases towards the transfer channel of the distributor and/or combustion chamber is avoided.

2. Process for controlling an engine exhaust circuit as per claim 1 characterised by the fact that, in the case of an engine with several cylinders, the depression intended for the secondary exhaust circuit of a cylinder is created by a dynamic pick-off in the flux of the main exhaust conduit of another cylinder which will be in the exhaust phase while the the first aforesaid cylinder is in the secondary exhaust phase.

3. Method for controlling an exhaust circuit on a rotary distribution engine as per claim 1 characterised by the fact that in the case of an engine with several cylinders, the depression intended for the secondary exhaust conduit is created by a dynamic pick-off in the main exhaust circuit flux downstream of the joining of all or part of the main exhausts when the flux has stabilized and circulation is continuous.

4. Method for inspection of an exhaust circuit as per claim 1 characterised by the depression intended for the secondary exhaust conduit being created by a separate or engine-driven vacuum pump.

5. Device for implementing the method as per claims 1, 3 and 4 in a rotary distribution motor with, in the distributor (4), a single lateral transfer channel (5), the device including a main exhaust conduit (6) which, in the exhaust phase of the cycle, is placed in communication with the combustion chamber (7) through a transfer channel (5) or the rotary distributor (4), characterised in that the rotary distributor (4) cuts off the said main exhaust conduit (6) in the exhaust phase of the cycle, slightly before the top dead centre, to avoid counter pressures and return flow of exhaust gases to the cylinder and, regarding the device, comprises a secondary exhaust circuit consisting of a conduit (11) radially drilled in the rotary distributor on another plane to the said transfer channel (5) and opening into the said transfer channel (5) by a port (10) drilled laterally in the transfer channel (5), and a conduit (12) drilled in the fixed cylinder head (3) opening on one side on the said conduit (11) of the distributor (4) in the cylinder bore and on the other side in a depressed volume (13), opening, slightly before the top dead centre, and closure, after the bottom dead centre, of this secondary exhaust circuit being controlled by lining up the conduit (12) drilled in the cylinder head and the conduit (11) radially drilled in the distributor thus allowing discharge of the combustion chamber and transfer channel by suction, the main rotary distributor opening the inlet (8) by its transfer channel (5), whereas the secondary exhaust circuit is still open.

6. Device for implementing the process as per claims 1, 3 and 4 in a rotary distribution motor comprising a main rotary distributor (4), a single lateral transfer channel (5), a device comprising a main exhaust conduit (6) which, in the exhaust phase of the cycle communicates with the combustion chamber (9) through the transfer channel (5) characterised in that the main rotary distributor (4) closes the main exhaust conduit (6) in the exhaust phase of the cycle slightly before the top dead centre to avoid counter pressures and back flow of exhaust gases to the cylinder and in that the device includes a secondary exhaust circuit consisting of a conduit (15) drilled in the cylinder head, positioned on and behind the main exhaust conduit in the direction of rotation, and opening onto the main rotary distributor (4) slightly on the same transversal planes as the transfer channel (5) and a secondary rotary distributor (16) controlling, roughly at the same time as closure of the main exhaust conduit (6), opening of the said conduit onto a volume in depression (17), thus ensuring the depression empties the combustion chamber and the dead volumes, the main rotary distributor opening the inlet (8) by its transfer channel (5) whereas the secondary exhaust circuit is still open, the closure of the secondary exhaust circuit being then assured by rotation of the main distributor (4) before the depression due to piston suction becomes higher than that in the volume (17);

7.  Device for controlling an exhaust circuit of a rotary distribution motor as per claim 6, characterised by the fact that the secondary rotary distributor (16) can be replaced by a slide valve or by a valve or any other means producing the same effect.

8.  Device for implementing the method as per claims 1 to 4 applied to conventional valve engines with main exhaust conduit (6) controlled by a conventional exhaust valve, characterised in that this valve closes the exhaust conduit slightly before the top dead centre at the end of the exhaust cycle to avoid counter pressures and exhaust gas back flow towards the cylinder and in that the device includes the so-called secondary exhaust conduit, connected to a depressurized volume and controlled by a second exhaust valve whose opening is operated before the top dead centre and closure after the top dead centre thus ensuring, by depression, emptying of the combustion chamber, with one inlet valve open whereas the secondary exhaust conduit is still open.

9.  Method for controlling an exhaust gas circuit as per claims 1 to 4 applied to a compressed inlet air motor or a turbo compressor, discharge of the combustion chamber and/or dead volume taking place due to the difference of pressure, above the atmospheric pressure at the inlet and roughly equal to the atmospheric pressure at the secondary exhaust, thereby emptying the dead volumes;

10. Device as per claims 5 to 8 for implementing the process as per claim 9 characterised in that the motor is equipped with an air compressor at the inlet.

11. Device for implementing the method as per claim 9, applied to a rotary distribution motor, comprising in the distributor (4) a single lateral transfer channel (5), the device comprising a main exhaust conduit (6) which, in the exhaust phase of the cycle is connected to the combustion chamber through the transfer channel (5) of the rotary distributor (4), characterised in that the engine is fitted with a turbo compressor, in that the rotary distributor (4) cuts off the main exhaust conduit (6) in the exhaust phase of the cycle slightly before the top dead centre to avoid counter pressures and back flow of exhaust gases to the cylinder, and in that the device comprises a secondary exhaust circuit consisting of a conduit drilled in the cylinder head positioned under and behind the main exhaust conduit in the direction of rotation, roughly in the same transversal plane, and opening into the exhaust behind the turbine, the secondary exhaust circuit being closed after the top dead centre by the rotary distributor, the main rotary distributor opening the inlet, whereas the secondary exhaust circuit is still open, thereby enabling discharge of the combustion chamber and of dead volumes by a pressure difference above the compressor-induced inlet pressure.

**Patentansprüche**

1.  Kontrollverfahren für eine Auspuffgasleitung von 4-Takt-Motoren mit Ventilsteuerung oder Drehsteuerung und in diesem Fall ausgerüstet mit einem Haupt-Drehverteiler (4) mit einem einzigen seitlichen Übertragungskanal (5), Verfahren bestimmt die Entleerung der während des oberen Totpunktes in dem von dem Brennraum (7) bzw. von dem Brennraum (7) und dem Übertragungskanal (5) des Drehverteilers (4) gebildeten toten Volumen enthaltenen Abgase zu gewährleisten, dadurch gekennzeichnet, daß

    -  das Schließen des Auslaßkanals wesentlich vor dem oberen Totpunkt erfolgt, auf eine Weise, daß mögliche Auspuffgegendrücke, entsprechend den Drehzahlen, nicht die Entleerung der Abgase in dem besagten toten Volumen (7;5,7) verhindern oder die Gase zum Zylinder zurück drängen,

    -  die besagte Entleerung der Abgase durch einen Sekundär-Auslaßkanal fortgeführt wird, der beim Schließen des Haupt-Auslaßkanals (6) das besagte tote Volumen (7; 5,7) mit einem durch jegliches geeignete Mittel in Unterdruck versetzten Kanal bzw. Kapazität (13) in Verbindung bringt;

- der Einlaß geöffnet ist während der Sekundär-Auslaßkanal noch geöffnet ist, was die Einlassansaugung und damit ein besseres Laden des Motors gewährleistet;

- und der Sekundär-Auslaßkanal dann geschlossen wird bevor der Unterdruck infolge des Ansaugens des Kolbens größer wird als der in der Kapazität der Sekundärleitung herrschende Unterdruck, um jeglichen Rückstoß von Abgasen in den Übertragungskanal des Verteilers und / oder des Brennraums zu unterbinden.

2. Kontrollverfahren für eine Auspuffgasleitung von Motoren gemäß Anspruch 1, dadurch gekennzeichnet, daß im Fall eines Motors mit mehreren Zylindern der für die Sekundär-Auspuffleitung eines Zylinders bestimmte Unterdruck erzeugt wird durch eine dynamische Entnahme in den Haupt-Auspuffleitungsstrom eines anderen Zylinders, der während der Sekundär-Auslaßphase des besagten ersten Zylinders auf Auslaß ist.

3. Kontrollverfahren für eine Auspuffgasleitung von Motoren mit Drehsteuerung gemäß Anspruch 1, dadurch gekennzeichnet, daß im Fall eines Motors mit mehreren Zylindern der für den Sekundär-Auslaßkanal bestimmte Unterdruck erzeugt wird durch eine dynamische Entnahme in den Haupt-Auslaßkanalstrom nach einer völligen oder teilweisen Vereinigung der Haupt-Auslaßkanäle der einzelnen Zylinder, während der Fluß stabilisiert und kontinuierlich ist.

4. Kontrollverfahren für eine Auspuffgasleitung gemäß Anspruch 1, dadurch gekennzeichnet, daß der für die Sekundär-Auslaßkanäle bestimmte Unterdruck durch eine autonome oder durch den Motor angetriebene Vakuumpumpe erzeugt wird.

5. Vorrichtung zur Anwendung des Verfahrens gemäß den Ansprüchen 1, 3 und 4 in einem Motor mit Drehsteuerung ausgerüstet mit in dem Drehverteiler (4) einem einzigen seitlichen Übertragungskanal (5), wobei die Vorrichtung mit einem HauptAuslaßkanal (6) versehen ist, der in der Auslaßphase des Zyklus durch den Übertragungskanal (5) des Drehverteilers (4) mit dem Brennraum (7) in Verbindung gebracht wird, dadurch gekennzeichnet, daß der Drehverteiler (4) den besagten Haupt-Auslaßkanal (6) in der Auslaßphase des Zyklus wesentlich vor dem oberen Totpunkt schließt, um einen Rückstoß von Abgasen in den Zylinder zu unterbinden, und daß die Vorrichtung mit einem Sekundär-Auslaßkanal versehen ist, gebildet aus einem radial in einer anderen Ebene als der Übertragungskanal (5) in den Drehverteiler gebohrten Kanal (11), der durch eine seitlich in den Übertragungskanal (5) gebohrte Öffnung (10) in den besagten Übertragungskanal (5) mündet, und einem in den festen Zylinderkopf (3) gebohrten Kanal (12), der einerseits in den besagten Kanal (11) des Drehverteilers (4) in der Gewindebohrung des Zylinderkopfes und andererseits in eine in Unterdruck versetzte Kapazität (13) mündet, indem das Öffnen dieses Sekundär-Auslaßkanals wesentlich vor dem oberen Totpunkt und das Schließen nach dem oberen Totpunkt durch die Gleichstellung des in den Zylinderkopf gebohrten Kanals (12) mit dem seitlich in den Verteiler gebohrten Kanals (11) gesteuert wird, was die Entleerung des Brennraums und des Übertragungskanals durch Absaugung ermöglicht wobei der Haupt-Drehverteiler durch seinen Übertragungskanal (5) die Ansaugung (8) öffnet während der Sekundär-Auslaßkanal noch geöffnet ist.

6. Vorrichtung zur Anwendung des Verfahrens gemäß den Ansprüchen 1, 3 und 4 in einem Motor mit Drehsteuerung ausgerüstet mit einem Drehverteiler (4), einem einzigen seitlichen Übertragungskanal (5), wobei die Vorrichtung mit einem Haupt-Auslaßkanal (6) versehen ist, der in der Auslaßphase des Zyklus durch den Übertragungskanal (5) des Drehverteilers (4) mit dem Brennraum (7) in Verbindung gebracht wird, dadurch gekennzeichnet, daß der Haupt-Drehverteiler (4) den Haupt-Auslaßkanal (6) in der Auslaßphase des Zyklus wesentlich vor dem oberen Totpunkt schließt, um einen Rückstoß von Abgasen in den Zylinder zu unterbinden, und daß die Vorrichtung mit einem Sekundär-Auslaßkanal versehen ist, gebildet aus einem in den Zylinderkopf gebohrten Kanal (15), der in Drehrichtung unterhalb und nach dem Haupt-Auslaßkanal angeordnet ist und in den Haupt-Drehverteiler (4) im wesentlichen in der gleichen seitlichen Ebene wie der Übertragungskanal (5) mündet, und einem Sekundär-Drehverteiler (16), der im wesentlichen bei dem Schließen des Haupt-Auslaßkanals (6) die Öffnung des besagten Kanals in eine in Unterdruck versetzte Kapazität (17) steuert und damit die Entleerung durch Absaugung des Brennraums und der toten Volumen gewährleistet, indem der Haupt-Drehverteiler durch seinen Übertragungskanal (5) die Ansaugung (8) öffnet während der Sekundär-Auslaßkanal noch geöffnet ist, wobei das Schließen des Sekundär-Auslaßkanals anschließend durch den Haupt-Drehverteiler (4) gewährleistet wird bevor der Unterdruck durch die Ansaugung des Kolbens größer ist als der der Kapazität (17).

7. Kontrollvorrichtung für eine Auspuffgasleitung von Motoren mit Drehsteuerung gemäß Anspruch 6, dadurch gekennzeichnet, daß der Sekundär-Drehverteiler (16) durch einen Schieber oder auch ein Ventil oder jedes andere Mittel mit der gleichen Wirkung ersetzt werden kann.

8. Vorrichtung zur Anwendung des Verfahrens gemäß den Ansprüchen 1 bis 4 für Motoren mit konventionellen Ventilen mit einem durch ein klassisches Auslaßventil gesteuerten Haupt-Auslaßkanal (6), dadurch gekennzeichnet, daß dieses Ventil den Auslaßkanal wesentlich vor dem oberen Totpunkt schließt, um den Rückstoß der Abgase in den Zylinder zu verhindern, und daß die Vorrichtung mit einem zweiten, sogenannten Sekundär-Auslaßkanal versehen ist, der mit einer in Unterdruck versetzten Kapazität verbunden ist und durch ein zweites Auslaßventil gesteuert wird, dessen Öffnen vor dem oberen Totpunkt und dessen Schließen nach dem oberen Totpunkt erfolgt, und somit die Entleerung des Brennraums durch Unterdruck gewährleistet, wobei ein Ventil die Ansaugung öffnet während der Sekundär-Auslaßkanal noch geöffnet ist.

9. Kontrollverfahren für eine Auspuffgasleitung gemäß den Ansprüchen 1 bis 4, angewendet auf einen Motor mit Ansaugluft-Verdichter oder einen Turboverdichter wobei die Entleerung des Brennraums und / oder der toten Volumen durch den Druckunterschied, bei in der Ansaugung höherem als dem atmosphärischen Druck und im Sekundär-Auslaß praktisch dem atmosphärischen Druck gleichem Druck, erfolgt und somit die Entleerung der toten Volumen ermöglicht.

10. Vorrichtung gemäß den Ansprüchen 5 bis 8 zur Anwendung des Verfahrens gemäß Anspruch 9, dadurch gekennzeichnet, daß der Motor in der Ansaugung mit einem Luftverdichter ausgerüstet ist.

11. Vorrichtung zur Anwendung des Verfahrens gemäß Anspruch 9, bezogen auf einen Motor mit Drehsteuerung ausgerüstet mit in dem Drehverteiler (4) einem einzigen seitlichen Übertragungskanal (5), wobei die Vorrichtung mit einem Haupt-Auslaßkanal (6) versehen ist, der in der Auslaßphase des Zyklus durch den Übertragungskanal (5) des Drehverteilers (4) mit dem Brennraum (7) in Verbindung gebracht wird, dadurch gekennzeichnet, daß der Drehverteiler (4) den besagten Haupt-Auslaßkanal (6) in der Auslaßphase des Zyklus wesentlich vor dem oberen Totpunkt sperrt, um einen Rückstoß von Abgasen in den Zylinder Zu verhindern, und daß die Vorrichtung mit einem Sekundär-Auslaßkanal versehen ist, gebildet aus einem in den Zylinderkopf gebohrten Kanal, der in Drehrichtung unterhalb und nach dem Haupt-Auslaßkanal, im wesentlichen in der gleichen seitlichen Ebene, angeordnet ist und in den Auslaß nach der Turbine mündet, wobei das Schließen des Sekundär-Auslaßkanals nach dem oberen Totpunkt durch den Drehverteiler erfolgt indem der Haupt-Drehverteiler die Ansaugung öffnet während der Sekundär-Auslaßkanal noch geöffnet ist und damit die Entleerung des Brennraums und der toten Volumen durch den Druckunterschied (infolge des Verdichters höher an der Ansaugung) ermöglicht.

FIG 1

FIG 2

FIG 3

FIG 4

FIG 5

FIG 6

EP 0 238 584 B1

FIG 7

14